# EUROPEAN PATENT SPECIFICATION

(11) **EP 0 962 131 B1**
(45) Date of publication and mention of the grant of the patent: **21.08.2002**
(21) Application number: 99203035.3
(22) Date of filing: 15.05.1995
(51) Int. Cl.: A01J 5/08, A01J 5/007

(54) **A method of milking animals**
Verfahren zum Melken von Tieren
Méthode de traite d'animaux

(30) Priority: 19.05.1994 NL 9400823
(43) Date of publication of application: 08.12.1999
(62) Divisional of application: 95201261.5
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 266 809
- EP-A- 0 300 582
- BE-A- 862 374
- FR-A- 2 149 598
- US-A- 4 223 635

## Description

The present invention relates to a method as described in the preamble of claim 1.

Such a method is described in the French patent application FR2149598. In this document, a teat cup is described with a teat cup lining having a flexible wall which contacts the teat. The teat cup lining extends for the whole length of the teat cup and connects the inner side of the teat cup with the milk line. An annular closure attached to the wall of the teat cup lining and to the cylindrical wall of the teat cup, forms two annular spaces on top of each other. The first one, next to the teat, is connected to a pulsator which alternately compresses the teat cup lining to perform a massage of the teat and performs a suction which looses the teat cup lining around the teat. The second one is connected to a second pulsator which works in a phase of 180 degrees in respect to first pulsator. In this way it compensates the pressure variations of the first pulsator.

It is an object of the invention to provide an alternative method. Hereto the method of the sort as defined above comprises the features of the characterizing part of claim 1.

As a result of the method followed during connecting of the teat cups and during milking, the pressure on the teats is slightly relieved; a teat cup is connected more smoothly, i.e. less jerkily.

In accordance with the invention, the pressure in the one chamber and/or in the other chamber and/or in the milk line connected to the teat cup can be adjustable for each animal individually and more in particular be udder-quarter-dependent.

For a better understanding of the invention and to show how the same may be carried into effect, reference will now be made, by way of example, to the accompanying drawings, in which:
Figure 1 is an elevational view of an implement for automatically milking animals;
Figure 2 is a plan view of a portion of the implement shown in Figure 1;
Figure 3 is a cross-sectional view of a teat cup for use with the method of the invention.

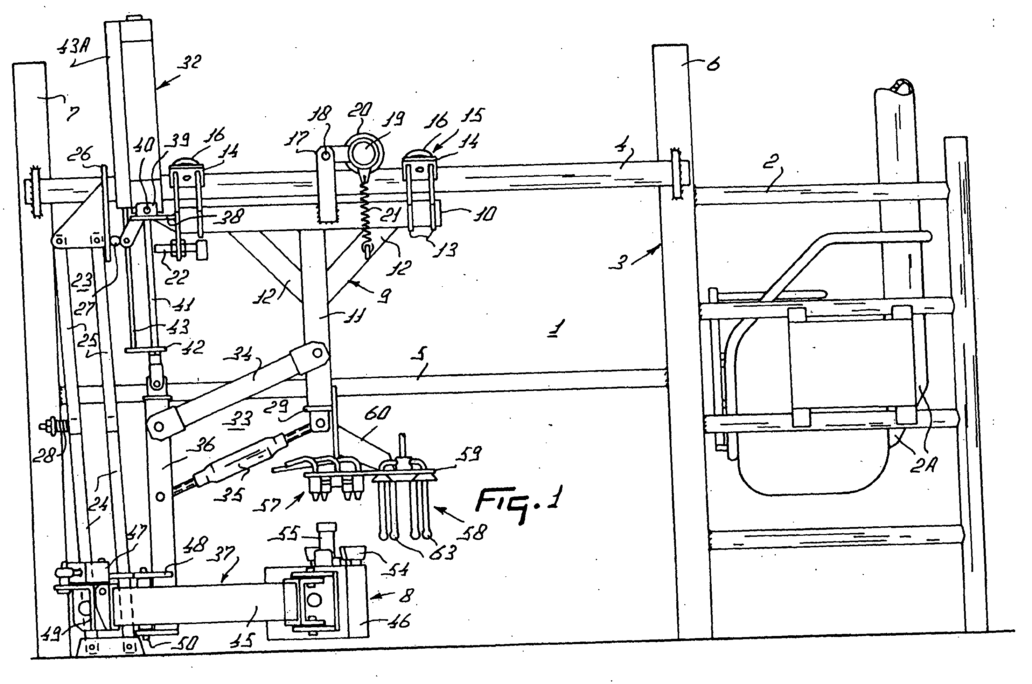

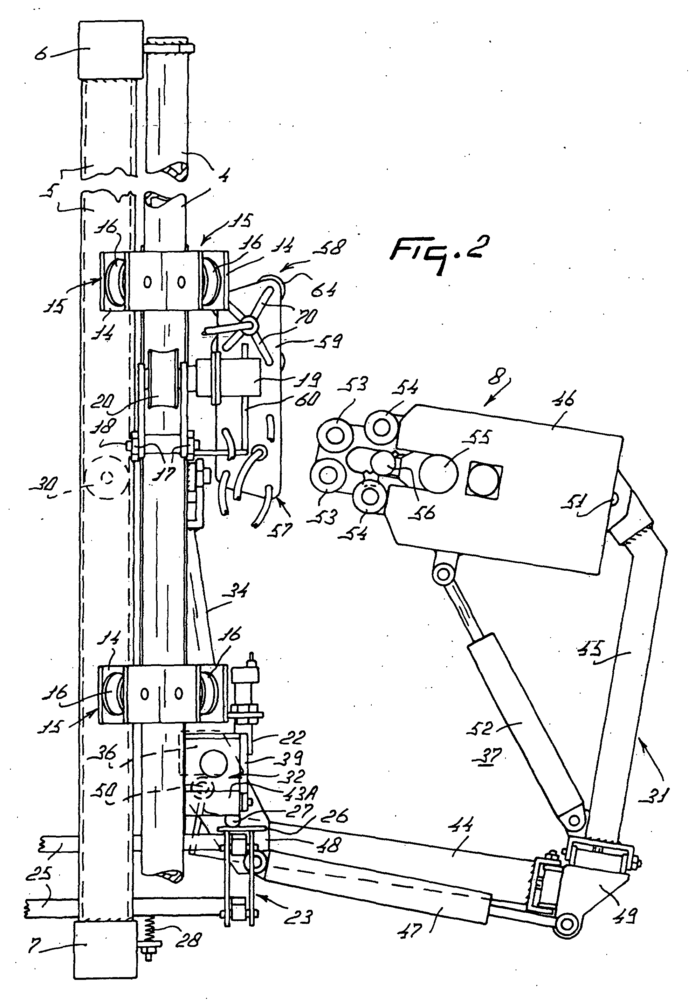

An example of an implement for performing the method according the invention, such as it is shown in Figures 1 and 2, includes a milking parlour 1 surrounded by a railing 2 which allows the animal a limited freedom of motion and is fitted with an automatically operating feeding implement 2A. The animal can enter the milking parlour from the side at the rear, whilst the animal can leave same again from this side at the front. Since the front end of the milking parlour includes a feeding implement, the cow will advance sufficiently far to arrive in a position in which she can easily be milked. At the longitudinal side of the milking parlour other than the one wherein its entrance and exit are located, there is a rigidly arranged frame 3, which is part of the railing 2, which frame 3 includes a first frame portion 4 and a second frame portion 5. The first frame portion 4 extends parallel to and is predominantly located above the second frame portion 5. In this situation, the first frame portion 4 is rigidly attached to the outer side of two vertical pillars 6 and 7, which are part of the railing 2, while the second frame portion 5 is rigidly connected between these two pillars 6 and 7. Movably connected to the first frame portion 4 there is a milking robot 8 for automatically connecting teat cups to the teats of the animals to be milked and disconnecting same therefrom, whilst this milking robot bears against the second frame portion 5, which is further disposed at such a height that arms of the milking robot 8 can be moved, passing underneath this second frame portion, to under the cow present in the milking parlour. The milking robot 8 includes a carrier frame 9 for the further portions of the milking robot. By implementing the upper frame portion 4 as a rail, the carrier frame 9 and consequently the entire milking robot 8 can easily be moved along this frame portion. The carrier frame 9 includes a beam 10 which extends predominantly parallel to the first frame portion 4, perpendicularly thereto a beam 11 which extends vertically and is rigidly connected thereto and two struts 12. Pairs of supporting elements 13 are disposed near the ends of the beam 10. Attached at an angle of approximately 45° to each pair of supporting elements 13, via supporting plates 14 rigidly connected thereto, there are two rollers 16 forming a roller element pair 15, the arrangement being such that the carrier frame 9 is suspended from the upper frame portion 4 in such a manner that it can easily be moved therealong underneath same. A carrier 17 is disposed at either side on the beam 10 of the carrier frame 9. A motor 19, which is capable of moving about a pivot shaft 18, is connected to these carriers. This motor 19 drives a roller 20 which preferably has a rubber surface, this roller being pushed against the upper frame portion 4 by means of a spring member 21. As the spring member 21 acts between the motor 19 and the carrier frame 9, the roller 20 to be driven by the motor 19 is kept in the position in which it pushes against the upper frame portion 4, so that, when the motor is energized, it is moved lengthwise along the upper frame portion 4 and consequently also the entire carrier frame 9. To the supporting element 13 that, taken in the direction of the milking parlour, is the rearmost one there is attached a sensor 22, which may comprise a laser. With the aid of this sensor 22, it becomes possible to transfer the milking robot from a resting position in the longitudinal direction of the milking parlour to a starting position, in which the arms of the milking robot are moved to under the animal present in the milking parlour, and to track the movements of the animal in the longitudinal direction of the milking parlour. To that end, the sensor 22 co-operates with a supporting element 23 which can move along the hind side of the animal. With the aid of a rod system, which in the present structure is in the form of a four-bar linkage, more specifically a parallelogram construction 24, this supporting element 23 is mounted on the milking parlour floor in such a manner that it is pivotal thereto. By means of two rods 25, the supporting element 23 is fitted with a plate 26 which is attached in such a manner that it extends laterally outside the frame portions 4 and 5 and is arrayed such that it can reflect a signal transmitted by the sensor 22. After the reflected signal has been received by the sensor 22, the sensor supplies a control signal which is a measure of the actual, i.e. the measured, distance between the plate 26 and the sensor 22, with the aid of which control signal the motor 19 can be driven, whilst the milking robot 8 is driven in the longitudinal direction of the milking parlour in such a manner that the distance between the plate 26 and the sensor 22 is adjusted to a preset value or is kept in this position, respectively. When the milking robot 8 is in its resting position, then it has been moved to a position which is as far as possible to the rear relative to the frame portions 4 and 5, whilst the milking robot 8 pushes via a contact element 27 against the plate 26 and thus keeps the supporting element 23 in a position in which it is pushed as far to the rear as possible. In other words, the supporting element 23 is locked by the milking robot 8 when the latter is in its resting position. When the milking robot is transferred from this resting position in the longitudinal direction of the milking parlour to the starting position, in which the arms of the milking robot are moved to under the animal present in the milking parlour, then the supporting element 23 is unlocked and pushed by means of a spring 28 arranged between the parallelogram structure 24 and the railing 2, under spring pressure, against the hind side of the cow then present in the milking parlour. When the cow moves forwards or rearwards, then the supporting element 23, in response to the pressure of the spring 28, will always remain in the position in which it pushes against the hind side of the animal, so that the position of the plate 26 defines the position of the animal in the milking parlour in the lengthwise direction and so that, by means of the sensor 22, whilst the distance in the longitudinal direction between the plate 26 and the sensor 22 is kept constant, the milking robot can track the movements of the cow in the longitudinal direction of the milking parlour. In the present design, the beam 11 of the carrier frame 9 extends downwardly in the vertical direction to just under the second frame portion 5. At the bottom side of this beam 1 there is a horizontal, rearwardly extending strip 29, on which a freely rotatable roller element 30 is accommodated. The lower frame portion 5 is constituted by a rail and more in particular by a rail formed by a U-beam, the freely rotatable roller element 30 having been disposed such that it is movable between the two upright edges of the U-beam. Thus, the milking robot 8 bears against the lower frame portion 5 and, when the milking robot 8 is moved along the first frame portion 4 by means of the motor, it can then easily move along the second frame portion 5. In addition to the carrier frame 9, the milking robot includes a robot arm structure 31 which is movable in a predominantly vertical direction relative to the carrier frame 9 by means of an operating cylinder 32. The robot arm structure 31 is movably connected to the carrier frame 9 via a four-bar linkage 33. In the example shown, the upper arm 34 of this four-bar linkage 33 is of a fixed length, whereas the lower arm 35 thereof has an adjustable length. Herewith the orientation of the robot arm structure 31 can be adjusted to a limited extent. The robot arm structure 31 includes a predominantly vertical robot arm 36, as well as robot arms 37 which are movable in a predominantly horizontal plane. Via the four-bar linkage 33 the robot arm 36 is connected to the beam 11 of the carrier frame 9. The operating cylinder 32 is operative between the carrier frame 9 and the robot arm 36. Since the orientation of the robot arm 36 is adjustable to a limited extent with the aid of the lower arm 35 of the four-bar linkage 33, the position of the point at which the operating cylinder 32 acts on the robot arm 36 is spatially not defined definitely. For this reason the housing of the operating cylinder 32 is disposed in such a manner on a carrier plate 38 connected to the beam 10 of the carrier frame 9 that it is at least capable of pivoting to a limited extent. On this carrier plate 38 there are provided supports 39, between which the housing of the operating cylinder 32 can move about a pivot shaft 40. In the present example, the operating cylinder is designed as a servo-pneumatic positioning cylinder. This means that the lower end of the piston rod 41 is provided by means of a plate 42 connected rigidly thereto with a position feedback rod 43, with the aid of which a signal indicating the position of the piston rod relative to the cylinder housing is derived in the portion 43A of the operating cylinder by a potentiometer, whilst with the aid of this signal supplied by this potentiometer the position of the piston rod 41 relative to the cylinder housing can be adjusted to a preset position. In addition, the operating cylinder 32 includes an overload protection, whereby, as soon as the animal present in the milking parlour exercises a pressure on the robot arm construction 31, e.g. by kicking it with her leg, the robot arm construction 31 can be moved to its lowest position. Figure 2 shows the milking robot 8 in its resting position, in which it is in its most rearward position relative to the frame portions 4 and 5 and in which the robot arm construction 31 has been moved to its lowest possible position near the soil. As soon as the cow is present in the milking parlour and the milking procedure is to be started, the milking robot 8 is moved from its resting position to the starting position, i.e. to the position in which the arms of the milking robot 8 can be moved to under the cow.

In the present example, the milking robot includes for this purpose arms 44, 45 and 46. The arms 44 and 45 are arranged at a fixed angle of 90° relative to each other. The arms 44 and 45 are therefore moved jointly, more specifically by an operating cylinder 47 disposed between a supporting plate 48 attached to the robot arm 36 and a connecting member 49 disposed between the two arms 44 and 45. The two arms 44 and 45 are pivotal about a predominantly vertical pivot shaft 50 between the supporting plate 48 and a supporting plate 50, the latter also being rigidly connected to the robot arm 36, more in particular to the lower end thereof. Relative to the arm 45, the arm 46 is pivotal about a predominantly vertical pivot shaft 51 and is pivoted with respect thereto by means of an operating cylinder 52 disposed between the arm 46 and that end of the arm 45 that is located near the connecting member 49. Near the end of the arm 46 there are arranged the teat cups 53 and 54 to be connected to the teats of the cow. Between the two teat cups 54 there is provided a slide, which is movable along the arm 46 and on which there is present a sensor 55, which by a sector-by-sector scanning motion can accurately determine the position of the teats, so that by means of the computer the operating cylinders 32, 47 and 52 can be controlled in such a manner that the teat cups can be connected to the teats in the proper manner. After the robot arms 44 - 46 have been moved to under the cow, these arms are in a relatively low position, in which the sensor 55 will not yet detect teats. Using the operating cylinder 32, the robot arms 44 - 46 are now moved upwards stepwise until the sensor 55 detects one or more of the animal's teats. In case during this upward motion the robot arms 44 - 46 should have been moved upwards to such a height that the upper edge of the sensor 55 pushes against the cow's abdomen, then, by means of a switch 56 located at the upper side of the sensor 55, the robot arms are caused to move downwards again, whereafter with the aid of the sensor 55 the determination of the position of the teats can be repeated, the robot arms being gradually moved upwards again in the process.

The implement, such as it has been described in the foregoing, further includes a washing member 57 for cleaning the teat cups 53 and 54 and optionally the milk circuit connected thereto and a cleaning member 58 for cleaning only the teat chamber of the teat cups. The washing member 57 as well as the cleaning member 58 are connected to a carrier 59 which is connected to the beam 11 via a support 60.

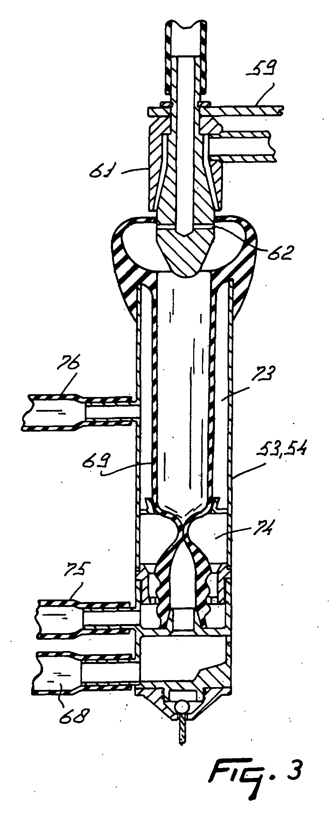

An example of a teat cup for applying the method according the invention is shown in Figure 3. In this teat cup a plurality, more in particular two mutually separated chambers 73 and 74 are present, whilst in at least one of these chambers, preferably in the chamber 74, an alternating underpressure can be produced. The first chamber 73 is mainly located around that portion of the teat chamber in which a teat of an animal to be milked, inserted therein, extends, whereas the second chamber 74 is mainly located around that portion of the teat chamber into which a teat, inserted therein, does not extend. The chamber 74 is smaller than the chamber 73. Preferably, also the teat cup lining which separates the chamber 74 from the teat chamber is made of a more flexible material than that portion of the teat cup lining which separates the chamber 73 from the teat chamber. This, together with the fact that the chamber 74 is considerably smaller, renders it possible to shut off the discharge from the teat chamber to the milk line 68 connected to the teat cup by means of an advantageously chosen difference in pressure between, on the one hand, the pressure in the chamber 74 and, on the other, the pressure in the milk line 68 connected to the teat cup. Such a teat cup requires, however, a dual connection for producing the desired pressure in each of the chambers 73, 74; consequently, in addition to the customary connection 75 of the, there is provided a second connection 76. The pressure in the two chambers 73 and 74, as well as the pressure in the milk line 68 connected to the teat cup can be controlled independently of each other.

The use of a teat cup of the type shown in Figure 3, having two mutually separate chambers 73, 74 around the teat chamber, has several advantages. The use of such teat cups renders connecting of the teat cups to the teats of an animal to be milked a lot more agreeable to the animal; this also holds for the milking operation itself, as hereby it is possible to reduce the pressure on the teats, more in particular during the idle stroke. In addition, such a teat cup can be used to clean, whilst employing the washing member 57, optionally either the entire teat cup and the milk circuit connected thereto, or solely the teat chamber of the teat cup itself, because by means of the second chamber 74 a separate shut-off feature is created at the lower end of the teat cup.

When a dual-chamber teat cup of this type is used in the automatic milking implement, connecting of such a teat cup will proceed in the following stages, which for that matter rapidly merge into each other:
- In a first stage, a teat cup is raised and pushed around the teat with the aid of the milking robot 8, whilst via the milk line air is sucked from the outside through the teat chamber, and as a result thereof the teat is sucked into the cup. In the upper chamber 73 e.g. an underpressure has been produced to give the teats adequate room, since, as long as the teat chamber has not yet been shut off, an atmospheric pressure remains in the teat chamber, in spite of the air suction. In this first stage, the lower chamber may be kept at atmospheric pressure.
- A second stage is initiated when the teat has been sucked that far into the teat chamber that the pressure in the teat chamber decreases to a predetermined underpressure value. This is the value of the pressure produced in the milk jar and in the milk lines connected to the teat cups. In this second stage, a pressure is preserved in the lower chamber 74, preferably an atmospheric pressure, which effects that the teat cup is closed near its lower end. In this situation, the upper chamber 73 can be kept at atmospheric pressure, although, with the object of relieving the teat to some extent, a slight underpressure may alternatively be produced therein. Since the teat cup is closed at its lower end, the cup is somewhat braked down in its upward motion, so that the teat is loaded to a lesser extent.
- In a third stage, the pressure in the lower chamber 74 is made substantially equal to that in the milk line connected to the teat cup, whilst the pressure in the upper chamber 73 is kept at atmospheric pressure. This causes the teat to be sucked farther into the teat cup, the teat cup then being in the connected state.

As soon as the teat cup has been connected, the milking proper can be started.

It should further be noted that the entire implement for automatic milking is under the control of a computer, i.e. that not only the milking robot 8 is computer-controlled, but that also the entire milking procedure itself is controlled by a computer. More in particular, regulating the pressure in the pulsation chamber of the teat cup shown in the two chambers of the teat cup shown in Figure 3, and also the pressure in the milk line connected to the teat cups is controlled by the computer. This provides the possibility to bring the value of the pressure in the various chambers in harmony with the individual animals and more specifically with the individual udder quarters. Thus, when e.g. an udder quarter has been infected by mastitis, the value of the pressure in the various chambers will have to be chosen such that the teat is loaded to the lowest possible extent. On the other hand, when e.g. the milk flow of a given animal is higher than that of other animals, the underpressure in the milk line connected to the teat cup can be adapted to this higher milk yield. The pressure in the various chambers of the teat cups and in the lines connected to the teat cups can also be influenced by the course of the lactation period or by the milking time elapsed since an individual milking turn. So as to render it possible to adjust the pressure in the separate chambers of the teat cup and the milk line connected thereto to the individual animals and optionally to the individual udder quarters, it is of importance to update the milk yield and the physical circumstances of the animal such as they were found in previous milking runs. Especially these historical data provide an appropriate point of departure to enable the best possible presetting of the circumstances in which an animal is milked, which circumstances are determined by the values of the pressure in the various chambers of the teat cup and the milk line connected thereto.

The invention is not limited to the embodiments described here, but also relates to all kinds of modifications therein, of course, insofar as they are within the scope of the following claims.

## Claims

1. A method of automatically milking animals with the aid of a construction including an implement for milking animals, such as cows, comprising a milking machine having one or more teat cups (53, 54) provided with a teat cup lining (69), and connected to a milk line (68), which teat cup lining separates the teat chamber from a chamber in the teat cup (53, 54), in which an alternating underpressure can be applied, whereby, between the teat cup wall and the teat cup lining (69), a teat cup (53, 54) includes at least two mutually separated chambers (73, 74), whilst an alternating underpressure can be applied in at least one (74) of these chambers, **characterized in that** connecting of the teat cup proceeds in the following stages:
- in a first stage, in which a teat is partly sucked into the teat chamber;
- in a second stage, which is initiated when the teat has been sucked so far into the teat chamber that the pressure in the teat chamber decreases to a predetermined underpressure value, in which stage the teat chamber is shut off from the milk line connected thereto by that portion of the teat cup lining that limits the chamber located farthest from the open end;
- in a third stage, in which this shut-off is disabled, whereafter the teat can enter further into the teat chamber.

2. A method as claimed in claim 1, **characterized in that** the pressure in the first chamber and/or in the second chamber and/or in the milk line connected to the teat cup is adjustable for each animal individually.

3. A method as claimed in claim 1 or 2, **characterized in that** the pressure in one chamber and/or in the other chamber and/or in the milk line connected to the teat cup is udder-quarter-dependent

## Patentansprüche

1. Verfahren zum automatischen Melken von Tieren mit Hilfe einer Anlage mit einer Vorrichtung zum Melken von Tieren, wie z. B. Kühen, die eine Melkmaschine mit einem oder mehreren Zitzenbechern (53, 54) umfaßt, welche mit einer Zitzenbecherauskleidung (69) versehen und an eine Milchleitung (68) angeschlossen sind, wobei die Zitzenbecherauskleidung den Zitzenraum von einer Kammer in dem Zitzenbecher (53, 54) trennt, in der ein wechselnder Unterdruck erzeugt werden kann, wobei ein Zitzenbecher (53, 54) zwischen der Zitzenbecherwand und der Zitzenbecherauskleidung (69) mindestens zwei voneinander getrennte Kammern (73, 74) aufweist, wobei in mindestens einer (74) dieser Kammern ein wechselnder Unterdruck erzeugt werden kann,
**dadurch gekennzeichnet, daß** das Anschließen des Zitzenbechers in folgenden Verfahrensschritten erfolgt:
- In einem ersten Verfahrensschritt, in dem eine Zitze teilweise in den Zitzenraum eingesaugt wird;
- in einem zweiten Verfahrensschritt, der beginnt, wenn die Zitze so weit in den Zitzenraum eingesaugt wurde, daß der Druck in dem Zitzenraum einen vorgegebenen Unterdruckwert unterschreitet, wobei in diesem Verfahrensschritt der Zitzenraum gegenüber der an ihn angeschlossenen Milchleitung durch denjenigen Teil der Zitzenbecherauskleidung verschlossen wird, der die am weitesten von dem offenen Ende entfernte Kammer begrenzt;
- in einem dritten Verfahrensschritt, in dem dieser Verschluß aufgehoben wird, wonach die Zitze weiter in den Zitzenraum eintreten kann.

2. Verfahren nach Anspruch 1,
**dadurch gekennzeichnet, daß** der Druck in der ersten Kammer und/oder in der zweiten Kammer und/oder in der an den Zitzenbecher angeschlossenen Milchleitung für jedes Tier einzeln einstellbar ist.

3. Verfahren nach Anspruch 1 oder 2,
**dadurch gekennzeichnet, daß** der Druck in der einen Kammer und/oder in der anderen Kammer und/oder in der an den Zitzenbecher angeschlossenen Milchleitung euterviertelabhängig ist.

## Revendications

1. Procédé de traite automatique des animaux à l'aide d'une structure qui comprend un instrument pour traire les animaux, tels que les vaches, comprenant une machine de traite avec un ou plusieurs gobelets trayeurs (53, 54) dotés d'une doublure de gobelet trayeur (69), et reliés à une ligne de traite (68), ladite doublure de gobelet trayeur séparant la chambre du trayon d'une chambre dans le gobelet trayeur (53, 54), dans laquelle une dépression peut être appliquée par alternance, moyennant quoi entre la paroi du gobelet trayeur et la doublure du gobelet trayeur (69), un gobelet trayeur (53, 54) comprend au moins deux chambres mutuellement séparées (73, 74), alors qu'une dépression peut être appliquée par alternance dans au moins l'une (74) de ces chambres, **caractérisé en ce que** le raccordement du gobelet trayeur est réalisé selon les étapes suivantes :
- une première étape, au cours de laquelle un trayon est partiellement aspiré dans la chambre du gobelet ;
- une seconde étape, qui commence quand le trayon a été aspiré si loin dans la chambre du gobelet que la pression dans la chambre du gobelet diminue à une valeur de dépression prédéterminée, moment auquel la chambre du gobelet est coupée de la ligne de traite qui y est raccordée par la partie de la doublure du gobelet trayeur qui délimite la chambre située le plus loin de l'extrémité ouverte ;
- une troisième étape, au cours de laquelle cette coupure est désactivée, ce après quoi le trayon peut pénétrer plus loin dans la chambre du gobelet.

2. Procédé selon la revendication 1, **caractérisé en ce que** la pression dans la première chambre et/ou dans la seconde chambre et/ou dans la ligne de traite raccordée au gobelet trayeur est réglable individuellement pour chaque animal.

3. Procédé selon la revendication 1 ou 2, **caractérisé en ce que** la pression dans une chambre et/ou dans l'autre chambre et/ou dans la ligne de traite raccordée au gobelet trayeur dépend du pis.
